(19) Europäisches Patentamt

European Patent Office

Office européen des brevets

(11) EP 1 054 282 A2

(12) EUROPÄISCHE PATENTANMELDUNG

(43) Veröffentlichungstag:
22.11.2000 Patentblatt 2000/47

(51) Int. Cl.7: G02B 21/00

(21) Anmeldenummer: 00108758.4

(22) Anmeldetag: 25.04.2000

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 21.05.1999 DE 19923295

(71) Anmelder:
Leica Microsystems Wetzlar GmbH
35578 Wetzlar (DE)

(72) Erfinder:
• Neumann, Burkhard
  58640 Iserlohn (DE)
• Krampe, Christof
  44805 Bochum (DE)

(74) Vertreter:
Reichert, Werner F., Dr.
Leica Microsystems International Holdings GmbH,
Konzernstelle Patente + Marken,
Postfach 20 20
35530 Wetzlar (DE)

(54) Transducer zur Erzeugung optischer Kontraste

(57) Transducer zur Erzeugung optischer Kontraste bei der Nahfelddarstellung von Topografien eines Objektes durch Auskopplung evaneszenter Wellen aus der Unterseite des Transducers, wobei die Transducerunterseite in der Fokusebene einer dem Transducer zugeordneten Abbildungsoptik angeordnet ist, dadurch gekennzeichnet, daß der Transducer (8) eine an die Bildfeldgröße der Abbildungsoptik (6) angepaßte, zum Objekt (11) weisende transparente planparallele Ausstülpung (7) aufweist.

Fig. 1

EP 1 054 282 A2

**Beschreibung**

Die Erfindung betrifft einen Transducer zur Erzeugung optischer Kontraste bei der Nahfelddarstellung von Topografien eines Objektes durch Auskopplung evaneszenter Wellen aus der Unterseite des Transducers, wobei die Transducerunterseite in der Fokusebene einer dem Transducer zugeordneten Abbildungsoptik angeordnet ist.

Aus US 5 349 443 ist es bekannt, daß mit einer planparallelen Glasplatte (Transducer) in unmittelbarer Nähe einer Probenoberfläche ein Tunnelkontrast erzeugt werden kann. Hierzu wird der Transducer schräg beleuchtet und dabei der Grenzwinkel der Totalreflexion zwischen Glas und Luft überschritten. An der Transducerunterseite treten dabei sogenannte evaneszente Wellen aus. Beleuchtung und Beobachtung der Transducerunterseite erfolgen mit einem Immersionsobjektiv hoher numerischer Apertur. Objektstellen, die in den Ausbreitungsbereich der evaneszenten Wellen eintauchen, koppeln an diesen Stellen das Licht aus. An der Transducerunterseite zeichnet sich die Topografie des Objektes als räumliche Intensitätsmodulation des Lichtes ab.

Da die Feldstärke des evaneszenten Wellenfeldes exponentiell mit dem Abstand zur Transducerunterseite abklingt und bereits

nach

$$\delta = \frac{\lambda_0}{2\pi\sqrt{A^2-1}}$$

mit

$\lambda_0$ = Vakuumwellenlänge
A = numerische Apertur des Objektivs

nur noch $\frac{1}{e}$ des ursprünglichen Wertes besitzt, muß die abzubildende

Probenoberfläche bis auf den Bruchteil eines Mikrometers an den Transducer herangeführt werden. Diese Bedingung wirft in mehrfacher Hinsicht Probleme auf.

Das Objekt weist im allgemeinen neben der feinen, abbildungsrelevanten Oberflächentopografie innerhalb des zu beobachtenden Objektfeldes eine im größeren Maßstab beobachtbare Oberflächenkrümmung auf. Eine ausreichend dichte Annäherung an die zu beobachtenden Stellen ist damit oft nicht möglich. Selbst eine Annäherung an eine ideal ebene Probe ist dann nicht gegeben, wenn sich auf ihr ein Schmutzpartikel befindet. Außerdem ist es mit hohem Aufwand verbunden, die plane Transducerunterseite hinreichend parallel zur Probenoberfläche zu justieren.

Aus der bereits genannten US 5 349 443 ist es bekannt, einen flexiblen Transducer zu verwenden. Dieser soll innerhalb des Objektfeldes steif und eben genug sein, aber über größere Distanzen den Unebenheiten der Probenoberfläche nachgeben können. Selbst Schmutzpartikel soll dieser flexible Transducer ausgleichen können.

Ein solcher flexibler Transducer stellt zwar eine Verbesserung gegenüber einer starren großflächigen Glasplatte dar. Es muß jedoch akzeptiert werden, daß der Transducer die Probenfläche lokal berührt, um sich ihr großflächig anpassen zu können. Dies ist aber für die Untersuchung empfindlicher Proben, wie z. B. integrierter Schaltkreise, keinesfalls erlaubt, weil eine Berührung im allgemeinen eine Zerstörung der Probe nach sich zieht. Außerdem wird eine höhere Transducerflexibilität stets mit einer Abnahme der Härte des Transducerwerkstoffes erkauft, so daß die Unterseite leicht verkratzen kann und damit für die Auskopplung evaneszenter Wellen unbrauchbar wird.

Aus US 5 004 307 ist es bekannt, anstelle eines Immersionsobjektivs mit Transducer ein Trockenobjektiv zu verwenden, bei dem im Raum zwischen Objektiv und Objekt ein gläserner Kugelausschnitt angeordnet ist. Dieser wird als „Solid Immersion Lens (SIL)" bezeichnet. Diese SIL ist so beschaffen, daß die zum Objekt weisende Seite eine Planfläche aufweist. An dieser Fläche, die auch die Schärfenebene des Objektivs darstellt, wird das vom Trockenobjektiv einfallende Licht totalreflektiert, so daß Tunnelkontrast entstehen kann. Ein Vorteil dieser Anordnung liegt darin, daß durch die spezielle Formgebung der SIL die Probenannäherung im allgemeinen gut möglich ist. Die Nachteile dieser Vorrichtung liegen aber in der sehr aufwendigen Herstellung der SIL, in dem recht hohen Justieraufwand, in der Erzeugung einer extrem ebenen Planfläche durch eine Politur mit sehr geringer Oberflächenrauhigkeit, in den durch die SIL verursachten Abbildungsfehlern bei höheren numerischen Aperturen und schließlich auch in dem großen Aufwand beim Austausch der SIL, wenn die untere Planfläche durch eine Berührung mit der Probe beschädigt sein sollte.

In der Nahfeld-Betriebsweise werden sowohl das evaneszente Wellenfeld unmittelbar außerhalb der SIL-Planfläche als auch das sich in Luft ausbreitende Lichtwellenfeld zur Abbildung eines Objektes benutzt, das in der Nähe der SIL angeordnet ist. Das Lichtwellenfeld kann zur Fokussierung verwendet werden und das evaneszente Wellenfeld steigert die Auflösung in Luft um den Faktor 1/n, wobei n der Brechungsindex des Materials ist, aus dem die SIL gefertigt ist. Durch die Nahfeld-Betriebsweise können daher zumindest teilweise Beugungseffekte umgangen werden, die in der Standard-Mikroskopie die Auflösung bei Abbildung in Luft begrenzen.

Aus US 5 121 256 ist es bekannt, diesen Effekt auch für die Erzeugung von Topografien auf einer Objektfläche zu benutzen. In der optischen Lithografie besteht ein ständiger Bedarf, zunehmend kleinere Musterstrukturen von einer Fotomaske auf einen Fotoresist zu übertragen. Die genannte Druckschrift beschreibt eine dafür geeignete SIL-Anordnung.

Der Erfindung liegt die Aufgabe zugrunde, einen Transducer zur Erzeugung optischer Kontraste im Nahfeldbereich des Transducers anzugeben, mit dem eine ungehinderte berührungslose Annäherung an die Probe möglich ist, der leicht ausgetauscht werden kann, der an spezielle Probengeometrien angepaßt werden kann, der senkrecht zur optischen Achse der Abbildungsoptik verschiebbar sein kann und dessen Fertigung mit günstigen Herstellkosten verbunden ist.

Diese Aufgabe wird bei einem Transducer der eingangs genannten Art erfindungsgemäß durch die kennzeichnenden Merkmale des Anspruchs 1 gelöst. Vorteilhafte Ausgestaltungen ergeben sich aus den Merkmalen der Unteransprüche.

Die mit dem erfindungsgemäßen Transducer erzielten Vorteile bestehen insbesondere darin, daß durch die Ausstülpung der Planplatte in der Mitte des Objektfeldes nur eine kleine Fläche der Plattenunterseite an die Oberfläche der Probe angenähert werden muß. Großflächige Probenunebenheiten oder gar Schmutzpartikel außerhalb der Ausstülpung behindern die Annäherung nicht. Diese Form des Transducers läßt es auch zu, daß die Abbildungsoptik und der Transducer als mechanische Einheit verbunden sind und die zu untersuchenden Objekte unter dieser Einheit verschoben werden können.

Für besonders problematische Probentopografien mit großen Höhenunterschieden kann die Ausstülpung besonders tief und schmal ausgestaltet werden, so daß auch dann noch eine lokal ungehinderte Probenannäherung möglich ist.

Für die Herstellung der Ausstülpung eignet sich ganz besonders ein thermisches Prägeverfahren. Die Form der Ausstülpung läßt sich mit der Spitze des Prägestempels vorgeben und die Tiefe kann über Material, Länge und Prozeßtemperatur des Prägewerkzeugs eingestellt werden.

Der Transducer wird vorzugsweise in Kombination mit einem Objektiv eines Auflicht-Mikroskops verwendet, wobei dieses mit einem Dunkelfeldstrahlengang ausgestattet sein sollte, um über besondere Blendenanordnungen die Beleuchtungsstrahlen von den Abbildungsstrahlen trennen zu können. Die Nahfelddarstellung der Topografien kann sowohl die Abbildung vorhandener Topografien als auch die Erzeugung von Topografien umfassen.

Der Transducer wird vorzugsweise in einer Immersionsanordnung verwendet, bei der zur Anpassung des Brechungsindexes zwischen Transducer und Abbildungsoptik ein Immersionsmittel den Zwischenraum ausfüllt. Außer einer flüssigen Immersion können mit Vorteil auch elastische oder plastische Substanzen verwendet werden.

Die zum Objekt weisende Fläche der Ausstülpung kann in vielfältiger Weise mit Strukturen oder Beschichtungen versehen sein, die die Funktionen des Transducers ergänzen, modifizieren und/oder sicherer machen. Kreisförmige Marken erleichtern die Ausrichtung der Ausstülpung relativ zur optischen Achse des Abbildungssystems und zur Schärfenebene des Abbildungssystems. Refraktive und diffraktive Strukturen ermöglichen eine besondere Einkopplung der Beleuchtungsstrahlen in den Transducer. Elektrische Kapazitäten erzeugende Schichten oder besondere Blendenanordnungen können als Annäherungssensoren verwendet werden. Beschichtungen mit einem härteren oder stärker das Licht brechenden Material dienen dem Schutz der Transducerunterseite und der Steigerung der Auflösung.

Ausführungsbeispiele des Transducers sind in der Zeichnung schematisch dargestellt. Aus der zugehörigen Beschreibung ergeben sich weitere Einzelheiten und Vorteile. Dabei zeigen:

Fig. 1     den Strahlengang eines Auflicht-Mikroskops mit Transducer

Fig. 2     den Strahlengang eines Auflicht-Mikroskops mit Dunkelfeldanordnung

Fig. 3     einen Schnitt durch einen Transducer

Fig. 4     eine Schnittdarstellung des Transducers nach Fig. 3 in Kombination mit der Abbildungsoptik

Fig. 5     den Strahlengang eines Auflicht-Mikroskops mit diffraktiver Einkopplung der Beleuchtungsstrahlen in den Transducer

Fig. 6     ein Prägewerkzeug zur Herstellung des Transducers

Fig. 7     eine Aufsicht auf den Transducer

Fig. 8     eine Schnittdarstellung zur Halterung des Transducers an einem Objektiv

Fig. 9     eine Prinzipdarstellung der Wellenfelder an der Transducerunterseite

Fig. 10     eine Prinzipdarstellung der Wellenfelder in Wechselwirkung mit einer Objekt-Topografie

Fig. 11     einen Transducer mit Quantenpunktlasern

Fig. 12     eine Aufsicht auf die gitterförmige Anordnung der Quantenpunktlaser

Fig. 13     eine Aufsicht auf einen Transducer mit Kondensatorplatten

Fig. 14     eine Aufsicht auf einen Transducer mit Lichteintritts- und Lichtaustrittsfenstern

Fig. 15     eine Schnittdarstellung des Strahlengangs durch die Fenster nach Fig. 14 mit Objekt im Nahfeld

Fig. 16     eine Schnittdarstellung wie Fig. 15 mit Objekt im Fernfeld

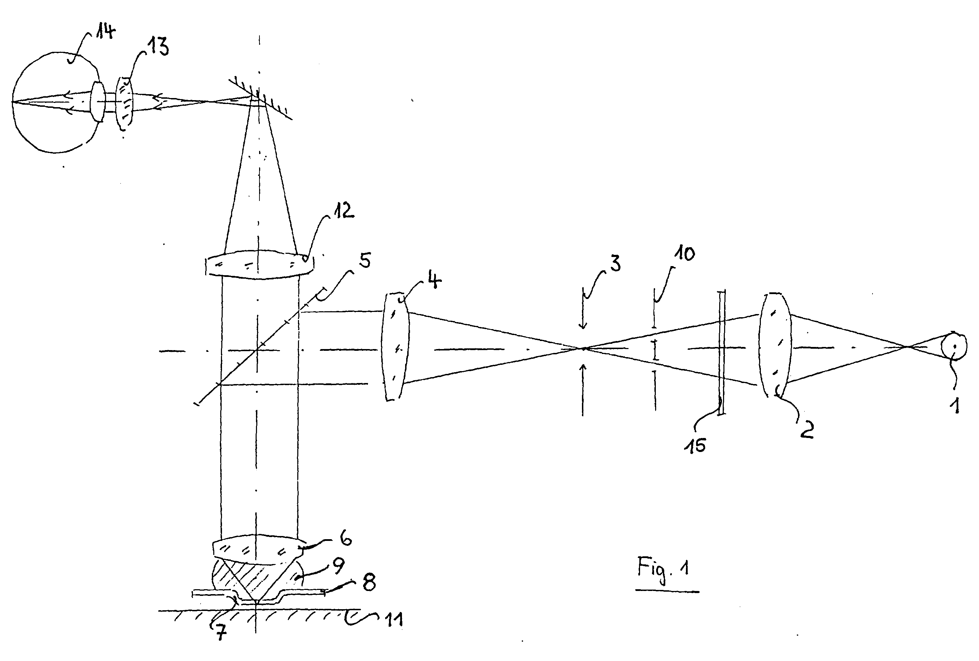

Fig. 1 zeigt den an sich bekannten Strahlengang eines Auflicht-Mikroskops mit Bildentstehung im Hellfeld. Eine Lichtquelle 1 wird über einen Kondensor 2 in die Ebene einer Feldblende 3 abgebildet. Eine nachfolgende Kollimatorlinse 4 bildet die Öffnung der Feldblende 3 nach Unendlich ab. Über einen teildurchlässigen Strahlteiler 5 wird der Beleuchtungsstrahlengang auf ein Objektiv 6 gelenkt, das die Feldblende 3 auf die Frontseite der Ausstülpung 7 eines Transducers 8 abbildet. Zwischen das Objektiv 6 und den Transducer 8 ist eine Immersion 9 zur Brechzahlanpassung eingefügt.

Im Strahlengang der Beleuchtungsoptik 1, 2 ist vor der Feldblende 3 eine ringförmige Aperturblende 10 angeordnet. Diese erzeugt ein ringförmiges Beleuchtungsstrahlenbündel, das nach Abbildung durch das Objektiv 6 unter einem extrem schrägen Winkel auf die Austrittsfläche des Transducers 8 fällt. Dadurch wird an der zu einem Objekt 11 weisenden Fläche der Ausstülpung 7 eine evaneszente Welle angeregt, welche die Eigenschaft hat, dicht an der Unterseite der Ausstülpung 7 lokalisiert zu sein, ohne in den unteren Halbraum abgestrahlt zu werden. Strukturen des Objekts 11, die in dieses Wellenfeld hineinragen, koppeln Licht aus, das nur zu einem Teil wieder in das Mikroskop zur Abbildung gelangt. Da diesen Bildstellen damit ein Teil des Streulichts fehlt, erscheinen sie dunkler als ihre Umgebung. Das in das Objektiv 6 vom Transducer 8 rückgestreute Licht wird nach Durchtritt durch den Strahlteiler 5 über eine Tubuslinse 12 und ein Okular 13 der visuellen Beobachtung 14 zugeführt.

Zur Verbesserung des Kontrastes zwischen Beleuchtungs- und Beobachtungsstrahlen kann in den Beleuchtungsstrahlengang noch ein Polarisator 15 eingefügt werden, wobei der Strahlteiler 5 zusätzlich in der Reflexion an die erzeugte Polarisation angepaßt werden kann. Durch die Wechselwirkung der Beleuchtungsstrahlen mit dem Transducer 8 und der Topografie des Objektes 11 wird die Polarisation verändert und in diesem Fall werden die in der Polarisation veränderten Abbildungsstrahlen durch den Strahlteiler 5 hindurchgelassen.

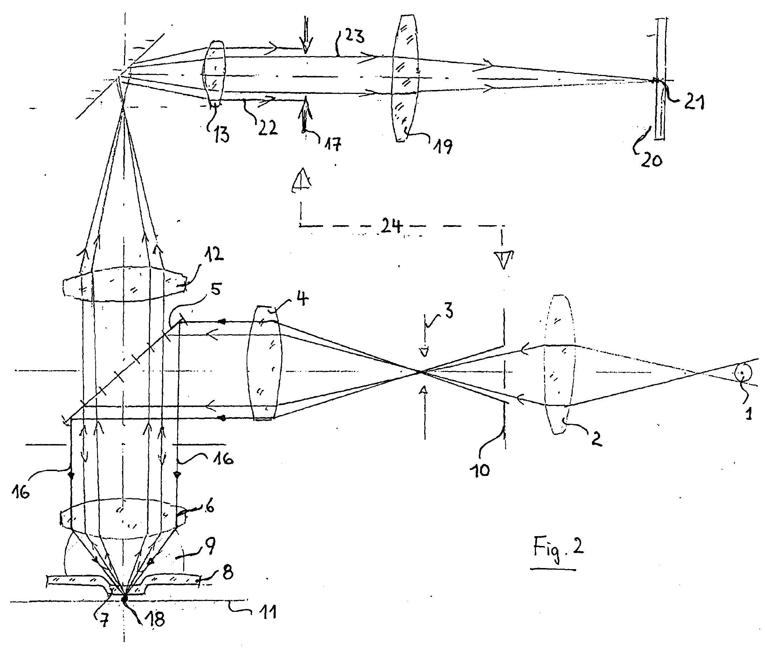

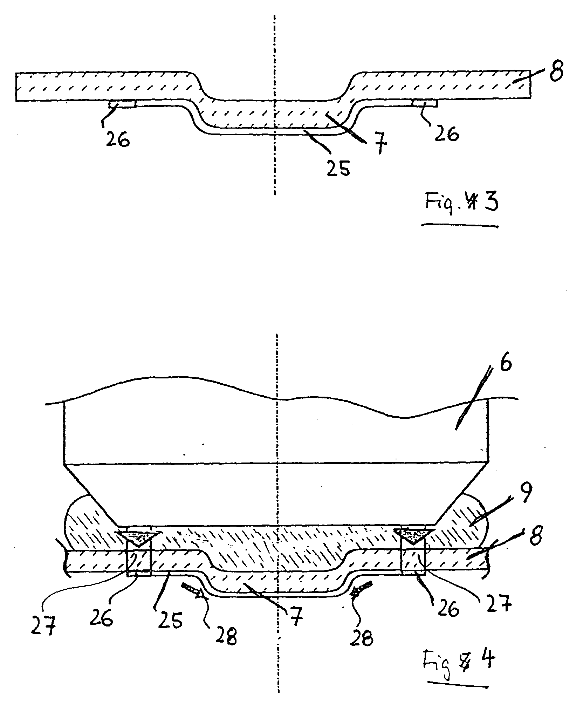

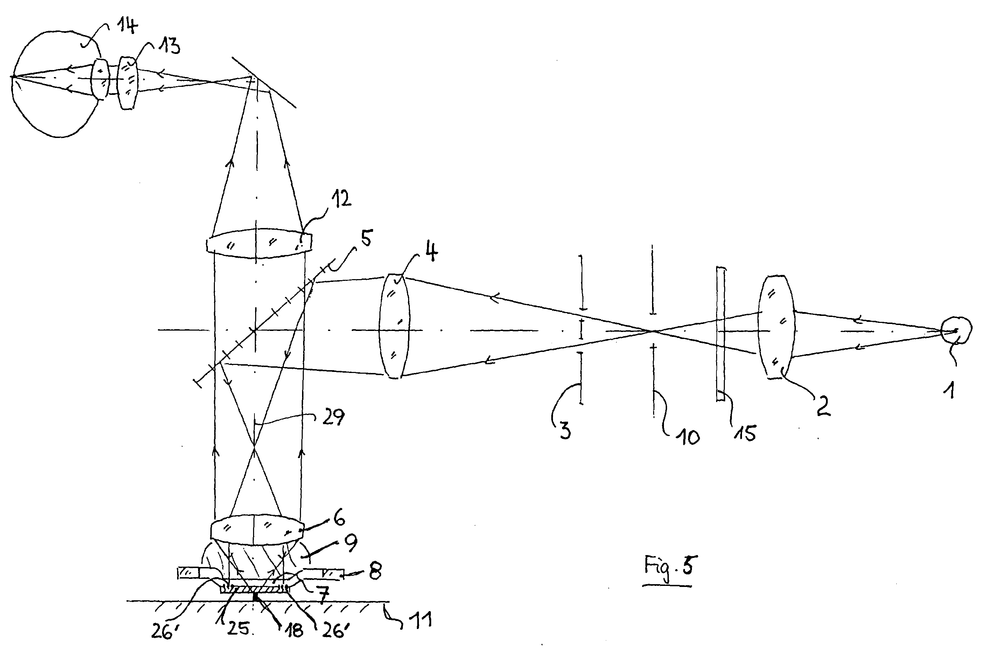

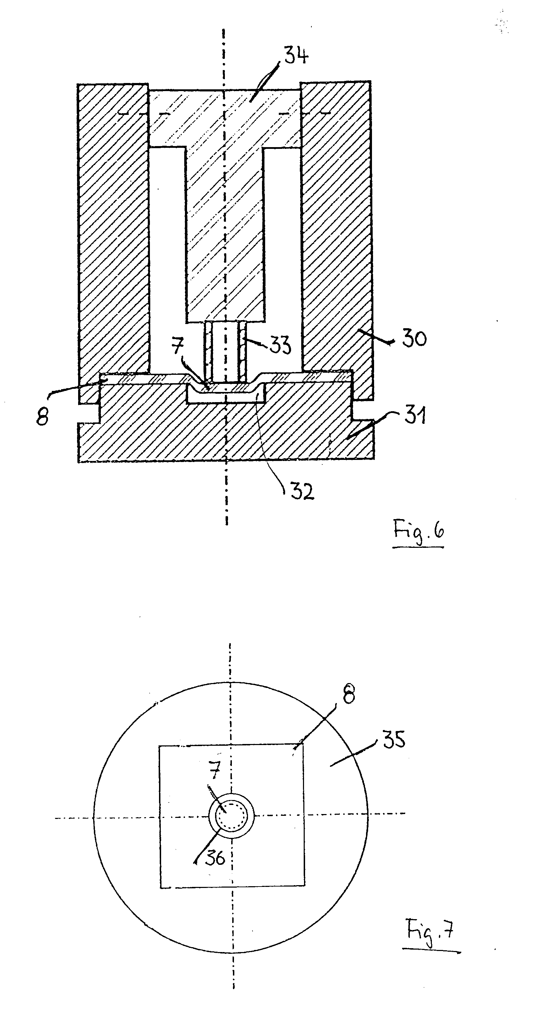

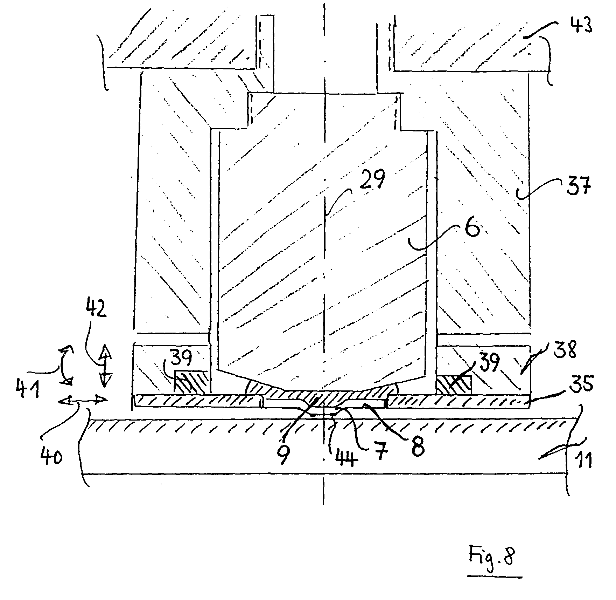

Eine Erweiterung dieses Abbildungsverfahrens ist in Fig. 2 dargestellt. In dieser Darstellung sind ergänzend die äußeren Randstrahlen 16 des ringförmigen Beleuchtungsstrahlenbündels eingezeichnet. Nach Reflexion an der Ausstülpung 7 des Transducers 8 werden die vom Objekt 11 unbeeinflußten Randstrahlen aus dem Beobachtungsstrahlengang durch eine Dunkelfeldblende 17 ausgeblendet, die genau in der Austrittspupillenebene des Mikroskops angeordnet ist. Durch diese Maßnahme gelangen nur die streuenden Objektstrukturen 18 zur Abbildung. Der Rest des ausgeleuchteten Objektfeldes bleibt in der Abbildung dunkel.

Eine langbrennweite Linse 19 bildet das Objekt 11 mit hoher Vergrößerung auf einen Bildsensor 20 ab. Die streuende Objektstruktur 18 wird so als Bildpunkt 21 vom Bildsensor 20 detektiert. Die ungebeugten Strahlen 22 werden von der Dunkelfeldblende 17 ausgeblendet, hingegen gelangen alle zum Streulicht gehörenden Strahlen 23 ungehindert zum Bildsensor 20.

Die ringförmige Aperturblende 10 und die Dunkelfeldblende 17 müssen von ihren Abmessungen her genau aufeinander abgestimmt sein. Aus diesem Grunde sollte beim Aperturblendenwechsel eine Zwangskopplung 24 zum Wechsler für die Dunkelfeldblenden bestehen.

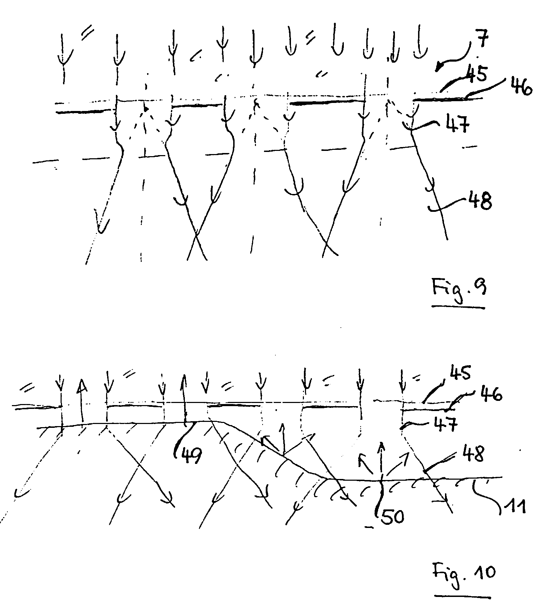

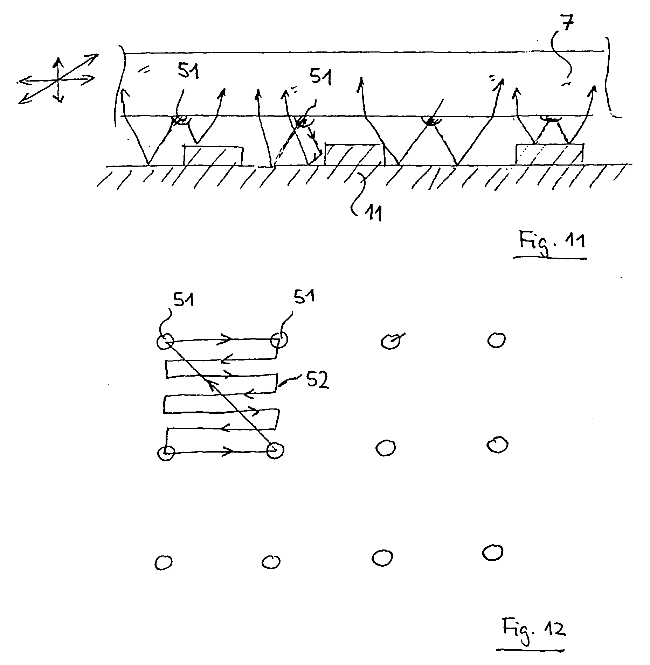

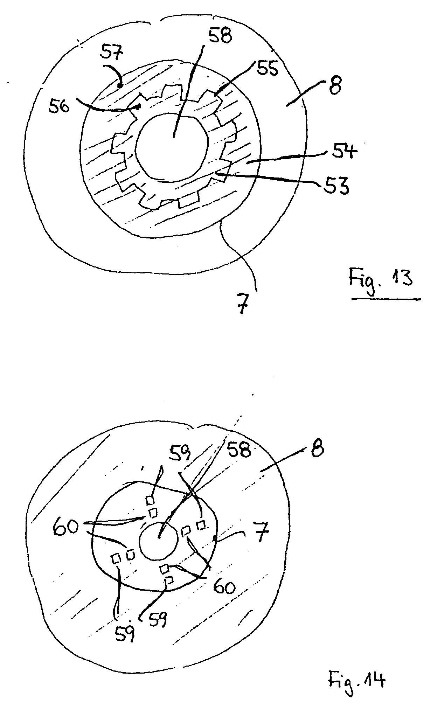

Fig. 3 zeigt eine Schnittdarstellung eines Transducers 8 mit Ausstülpung 7. Wie einleitend ausgeführt wurde, können Anwendungsfehler zu einer Probenberührung führen. Eine dünne Schicht 25 aus einem sehr harten, transparenten Material verhindert in diesem Fall die Bildung von Kratzern und damit die Beschädigung des Transducers. Ein weiterer und sehr wichtiger Grund für die Beschichtung mit einem zusätzlich noch hochbrechenden Material besteht darin, daß die evaneszente Welle (Oberflächenwelle) eine Wellenlänge besitzt, die umgekehrt proportional zum Brechungsindex der Transducerunterseite, im Falle der Beschichtung also der der hochbrechenden Schicht ist. Da sich hochbrechende, transparente Materialien in den seltensten Fällen ebenso gut wie Glas bearbeiten lassen, ist in Verbindung mit dieser Dünnschichttechnik trotzdem eine ideale Formgebung des Transducers möglich.

Am Rande der Schicht 25 sind noch Lichtkoppler 26 dargestellt. Diese sind vorzugsweise konzentrisch um den Mittelpunkt der Ausstülpung 7 angeordnet und befinden sich am Rande des zu beobachtenden Objektfeldes. Die Lichtkoppler 26 bestehen vorzugsweise aus refraktiven oder diffraktiven Elementen, wie sie aus der Integrierten Optik bekannt sind. Dabei ist zu beachten, daß die Lichteinkopplung in die als Filmwellenleiter wirkende hochbrechende Schicht 25 radial zur Mitte der Ausstülpung 7 erfolgt und das in den Koppler einfallende Licht üblicherweise aus verschiedenen Winkeln vom Objektiv her kommt.

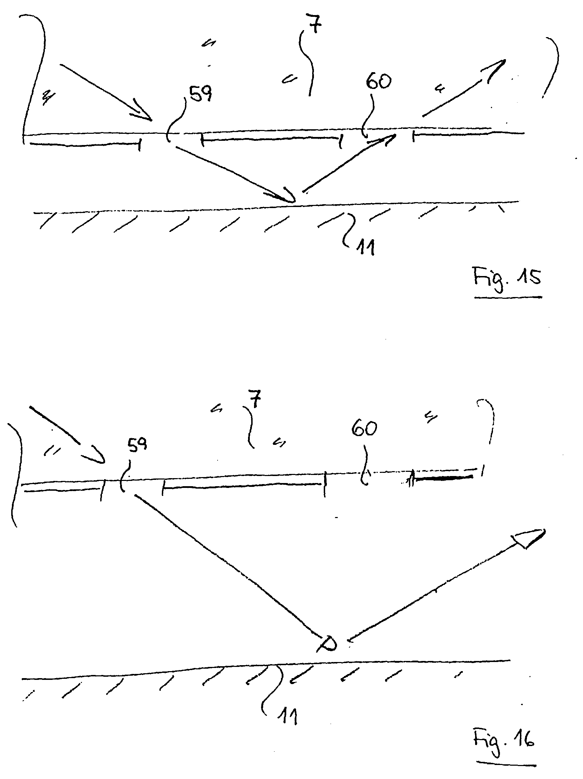

In Fig. 4 ist dieser Sachverhalt noch weiter dargestellt. Das Objektiv 6 und der Transducer 8 sind über die Immersion 9 miteinander optisch gekoppelt. Dabei kann es je nach den Umständen durchaus sinnvoll sein, die Immersion 9 als transparente plastische oder elastische Substanz zu wählen, so daß die Immersion bei einem festen Einbau des Transducers in das Immersionsobjektiv nicht ausfließen kann. Es sind Immersionen bekannt, die für die Zeit des Transducereinbaus und der Ausrichtung zum Objektiv flüssig sind und dann durch einen optisch, chemisch oder anderweitig induzierten Umwandlungsprozeß plastisch oder elastisch werden. Dabei sollte darauf geachtet werden, daß sich der Transducer bzw. das Objektiv von der Immersion für den Fall des Austauschs wieder trennen lassen. Das Immersionsmedium muß so beschaffen sein, daß sich keine inneren Spannungen bilden können, um z. B. eine Spannungsdoppelbrechung zu vermeiden.

Die Außenseite der hochbrechenden Schicht 25 liegt möglichst exakt in der Schärfenebene des Objektivs 6. Die ringförmige Beleuchtung ist schematisch durch mit einem Richtungspfeil versehene Lichtbündel 27 dargestellt, die durch den Transducer 8 hindurch auf die Lichtkoppler 26 fallen. Durch die Lichtausbreitung in Pfeilrichtung 28 in der als Filmwellenleiter wirkenden hochbrechenden Schicht 25 ragt ein Teil des Wellenfeldes im Bereich der Ausstülpung 7 in den Objektraum hinein, wird aber wegen Totalreflexion zunächst nicht in diesen abgestrahlt.

Bei dem in Fig. 5 dargestellten Ausführungsbeispiel ist als Lichtkoppler für die hochbrechende Schicht 25 eine konzentrisch zur optischen Achse 29 der abbildenden Optik auf der Ausstülpung 7 angeordnete beugende Gitterstruktur 26' vorgesehen. Wie bereits erwähnt, nimmt die Wellenlänge der evaneszenten Welle mit wachsendem Brechungsindex n des Transducermaterials ab. Wegen der bekannten Abhängigkeit zwischen numerischer Apertur NA eines Immersionsobjektivs und Brechungsindex n ($NA = n \cdot \sin(u)$) ist die Wellenlänge $\lambda_{ev}$ der evaneszenten Welle umgekehrt proportional zu NA.

Nach dem Brechungsgesetz bleibt die numerische Apertur NA jedoch konstant. Eine durch Lichtbrechung bedingte Einkopplung der Lichtwelle in die hochbrechende Schicht 25 führt daher nicht ohne weiteres zu einer gewünschten kürzeren Wellenlänge $\lambda_{ev}$. Die im Randbereich der Ausstülpung 7 angeordnete konzentrische Gitterstruktur 26' beugt die einfallende Lichtwelle jedoch derart, daß sie sich in der hochbrechenden Schicht 25 möglichst parallel zu deren Oberfläche ausbreitet. In diesem Fall ist dann die NA = n und

$$\lambda_{ev} = \frac{\lambda_0}{n}$$

($\lambda_0$ ist die Vakuumwellenlänge). Um diesen Effekt zu erreichen, muß die Gitterkonstante g der Gitterstruktur 26' der Wellenlänge $\lambda$ im Transducer entsprechen, denn dann beträgt der Beugungswinkel $\vartheta = 90°$. Die Herstellung derartig beugender Strukturen kann mittels Elektronenstrahllithografie durchgeführt werden.

Eine Beleuchtungseinrichtung, die für diesen Fall der Lichteinkopplung benötigt wird, ist ebenfalls in Fig. 5 dargestellt. Die Aperturblende 10 ist hier als kreisförmige Hellfeldblende ausgebildet. Die Leuchtfeldblende 3 enthält dagegen genau an den Stellen Öffnungen, die auf die beugenden Strukturen 26' auf dem Transducer abgebildet werden. Bei dieser Anordnung wird das Licht mit dem Strahlteiler 5 in das Objektiv 6 umgelenkt. Das Objektiv 6 bildet die Öffnungen der Leuchtfeldblende 3 auf die beugenden Strukturen 26' des Transducers 8 ab, so daß sich eine Schichtwelle in der hochbrechenden, transparenten Schicht 25 ausbildet. Die Schichtwelle besitzt eine evaneszente Welle, die in den Objektraum unterhalb des Transducers reicht. Eine streuende Objektstruktur 18 streut die Welle, und ein Teil des Streulichts gelangt über den Transducer 8 wieder in das Mikroskop zurück. Hier gelangt diese Objektstruktur 18 über die Tubuslinse 12 und das Okular 13 im Auge 14 zur Abbildung.

In Fig. 6 ist dargestellt, wie der Transducer 8 durch thermisches Prägen mit der Ausstülpung 7 versehen wird. Als Transducer wird dabei z. B. ein handelsübliches quadratisches Deckgläschen verwendet, wie es zur Probenabdeckung auf einem Objektträger für die Mikroskopie eingesetzt wird. Dieses Deckgläschen wird zwischen einem Oberteil 30 und einem Unterteil 31 einer Prägevorrichtung gehalten. Das Unterteil besitzt an der Stelle, an der die Prägung erfolgen soll, eine Aussparung 32, die so tief ist, daß die empfindliche Transduceroberfläche nicht mit der Oberfläche des Unterteils 31 in Berührung kommt. Die Transduceroberfläche muß insbesondere auf der Unterseite der Ausstülpung 7 nahezu perfekt eben sein, weil sich andernfalls die Unebenheiten als zusätzliche, störende Bildinformationen dem eigentlichen Bild überlagern würden. Ein Deckgläschen der genannten Art erfüllt diese Forderungen hinreichend gut. Für das Prägen der Ausstülpung werden unterschiedliche Ausdehnungskoeffizienten verschiedener Metalle ausgenutzt. Das Oberteil 30 besteht z. B. aus Messing, während der die Stempelspitze 33 tragende Eindruckstempel 34 aus Aluminium besteht. Das obere Ende des Eindruckstempels 34 ist mit dem Oberteil 30 der Prägevorrichtung verbunden. Als Stempelspitze 33 hat sich ein Röhrchen aus Edelstahl bewährt.

Die Differenz der Ausdehnungskoeffizienten von Messing, Aluminium und Edelstahl bezogen auf die Länge des Eindruckstempels 34 und der Spitze 33 entspricht der effektiven Eindringtiefe des Eindruckstempels in das Deckgläschen beim Durchlaufen eines bestimmten Temperaturintervalls. Bei einer maximalen Stempellänge von insgesamt 38 mm läßt sich eine Eindrucktiefe von 90 μm in das Deckgläschen herstellen, das z. B. aus dem Glas BK 7 besteht. Die Aufheiztemperatur beträgt etwa 430°C, wobei eine optimale Aufheizgeschwindigkeit bei ca. 8-10°C/min liegt. Die Eindruckgeschwindigkeit beträgt dabei etwa 6 μm/min.

Die Verwendung eines Röhrchens als Stempelspitze 33 hat sich als besonders vorteilhaft erwiesen, weil damit einmal minimale Kontaktflächen zum Deckgläschen bestehen, die die Glasfläche beschädigen könnten und sich zum andern die Ausstülpung etwa einer Membran entsprechend über das Röhrchen spannt. Die Ebenheit und Parallelität der Glasplättchen im Bereich der Ausstülpung bleiben dabei optimal erhalten. Geeignete Ausstülpungen haben einen Druchmesser von etwa 1 mm. Durch Anordnung mehrerer Stempelspitzen 33 nebeneinander mit unterschiedlichen Durchmessern lassen sich auch Transducer mit entsprechenden Ausstülpungsarrays herstellen.

Fig. 7 zeigt eine Aufsicht auf einen Transducer 8 mit Ausstülpung 7. Als dünne Glasplatte ist der Transducer 7 sehr zerbrechlich und kann als Austauschteil nicht direkt an dem zugeordneten Objektiv befestigt werden. Er ist daher in eine dünne Rahmenplatte 35, die z B. aus Stahl besteht, eingelegt und erhält dadurch seine mechanische Stabilität. Über Magnete kann die Rahmenplatte 35 z. B. an dem zugeordneten Objektiv befestigt werden.

Die Ausstülpung weist zusätzlich eine ringförmige, konzentrisch zu ihrem Mittelpunkt angebrachte Markierung 36 auf. Diese Markierung, die z. B. aus einem geschlossenen Kreis und einem gestrichelten Kreis bestehen kann, dient der Justage und Zentrierung der Ausstülpung im optischen Strahlengang des Mikroskops.

Fig. 8 zeigt schematisch eine Halterung für die Rahmenplatte 35 mit dem Transducer 8 an einem Objektiv 6. Die Halterung besteht hier aus zwei Teilen 37 und 38, von denen das Teil 37 in einen Mikroskop-Revolver 43 eingeschraubt ist und das Objektiv 6 trägt. Das Teil 38 ist mit Magneten 39 versehen und im übrigen mit einer mechanischen Justierung 40, 41, 42 in allen Freiheitsgraden versehen, die durch Pfeile angedeutet sind. Die Rahmenplatte 35 ist über die Magnete 39 an dem Halterungsteil 38 austauschbar gehalten. Die Justierung der Ausstülpung zur Schärfenebene des Objektivs 6 und zentrisch zur optischen Achse des Objektivs erfolgt z. B. durch visuelle Beobachtung der Markierung 36. Die Markierung 36 ist dazu vorzugsweise auf der zum Objekt 11 weisenden Fläche des Transducers angebracht.

Die Ausstülpung weist in diesem Beispiel noch eine in ihrem Randbereich liegende teiltransparente Beschichtung 44 auf. An dieser Schicht wird ein Teil des Beleuchtungslichtes reflektiert, ein anderer Teil transmittiert. Das transmittierte Licht gelangt auf die Oberfläche der Probe 11, wird an dieser reflektiert und interferiert mit den an der transparenten Schicht reflektierten Lichtwellen. Mit einem geeigneten Sensor können diese Interferenzerscheinungen detektiert und für eine geregelte Annäherung der Probe an den Transducer genutzt werden.

Die erfindungsgemäße Ausstülpung am Transducer erlaubt die Annäherung einer planen Fläche sehr dicht heran an eine Probenoberfläche. Damit wird es möglich, dem Objekt direkt künstliche Strukturen zu überlagern, was sonst nur aus dem Fernfeld durch verkleinerte Projektion möglich ist. Durch Abbildungen über das Fernfeld können dem Objekt jedoch wegen der Auflösungsbegrenzung nicht beliebig feine Strukturen überlagert werden. Eine zur Kontraststeigerung vorteilhafte Struktur ist z. B. ein Gitter. Im Nahfeldbereich tritt eine Gitterprojektion mit Überaufösung ein. Das vom Objekt reflektierte Licht kann durch den entsprechenden Gitterspalt wieder in das Objektiv gelangen. Auf weiter vom Gitter entfernte Objektbereiche wird die feine Struktur aufgrund der Beugung nicht mehr abgebildet und die Lichttransmission zum Objektiv zurück wird geringer. Hierdurch entsteht im Gitternahbereich ein sehr empfindlicher Topografiekontrast. Ebenso wie die bereits erwähnte ringförmige Gitterstruktur 26' und die Markierung 36 können solche feinen Gitterstrukturen z. B. durch elektronenstrahl-lithografische Methoden auf der Ausstülpung 7 des Transducers 8 aufgebracht werden.

In Fig. 9 sind die Ausstülpung 7, eine auf der zum Objekt weisenden Fläche 45 aufgebrachte feine Gitterstruktur 46, sowie die Nahfeld-Lichtstrahlen 47 und Fernfeld-Lichtstrahlen 48 hinter dem Gitter dargestellt. Erkennbar ist, daß im Nahfeldbereich keine Beugungseffekte auftreten.

In Fig. 10 ist die durch Gitterprojektion erzeugte Kontrasterhöhung an der Topografie der Oberfläche des Objekts 11 dargestellt. Im Objektbereich 49 befindet sich die Oberfläche im Nahfeld 47 und das reflektierte Licht kann besser durch den Gitterspalt in das Objektiv zurückgelangen als im Objektbereich 50, wo sich die Oberfläche bereits im Fernfeld 48 befindet. Hier verhindert die Beugung eine effiziente Transmission durch das Gitter zurück.

Aus der wissenschaftlichen Forschung sind sogenannte Quanten-Punkt-Laser bekannt, die Abmessungen im 30 nm-Bereich aufweisen. Diese kleinen aktiven Lichtquellen können auf der zum Objekt weisenden Fläche 45 der Ausstülpung 7 angebracht werden. Mit ihnen ist dann eine Objektabtastung mit Überauflösung möglich. Fig. 11 zeigt eine regelmäßige Anordnung von Quanten-Punkt-Lasern 51, die in der Aufsicht ein zweidimensionales Gitter bilden (Fig. 12). Das Objekt 11 kann durch einen Mikroscan 52 des Objekts 11 oder des Transducers mit Ausstülpung 7 abgetastet werden. Aus der Darstellung in Fig. 11 sind die unterschiedlich reflektierten Lichtstrahlen bei Beleuchtung und Reflexion an hervorstehenden Objekttopografien ersichtlich. Damit eine Abtastung mit Überauflösung erzielt werden kann, muß der Abstand zwischen benachbarten Quanten-Punkt-Lasern 51 größer als die Auflösung des Mikroskops im Fernfeldbetrieb sein.

Anstelle der als aktive Lichtquelle arbeitenden Quanten-Punkt-Laser ist es auch möglich, eine in gleicher Art angeordnete Punktstruktur aus einem fluoreszierenden Material oder Metall auf der dem Objekt zugewandten Seite der Ausstülpung anzubringen. Die Punkte sollen eine laterale Abmessung aufweisen, die unterhalb des Auflösungsvermögens des Mikroskops liegt. Die Punkte wirken als indirekte Punktstrahler, weil sowohl das Fluoreszenzlicht als auch das an den Metallflächen erzeugte Streulicht durch eine primäre Lichtquelle erzeugt werden muß.

Ebenso lassen sich punktförmige Lichtquellen durch gitterförmig angeordnete Blendenöffnungen erzeugen, die rückwärtig beleuchtet werden. Die Objektinformation wird von dem transmittierten Licht aus dem Nahfeld übertragen.

Eine geregelte Probenannäherung an den Transducer benötigt ein vom Abstand zwischen Probe und Transducer abhängiges Signal. Derartige Signale lassen sich dadurch erzeugen, daß auf der Ober- oder Unterseite der Ausstülpung des Transducers eine Kondensatorstruktur aufgebracht wird. In Fig. 13 ist eine geeignete Kondensatorstruktur 53, 54 dargestellt, die im Randbereich der Ausstülpung 7 angebracht ist. Die mäanderförmige Grenzlinie 55 zwischen den elektrisch leitenden Schichten 53, 54 ist hoch isolierend. Die Schichten 53, 54 sind mit elektrischen Kontakten 56, 57 versehen. Bei Annäherung an die Ausstülpung 7 gelangt die Probe in das elektrische Streufeld des Kondensators und verändert dadurch seine Kapazität. Ein entsprechendes Signal kann über die Kontakte 56, 57 abgenommen werden. Die mäanderförmige Grenzlinie 55 erhöht die Größe des elektrischen Streufeldes und verstärkt den Effekt der Kapazitätsänderung bei Annäherung der Probe. Der zentrale Bereich 58 der Ausstülpung 7 dient der Probenbeobachtung.

Die in Fig. 14 dargestellte Blendenanordnung auf der Unterseite der Ausstülpung 7 dient ebenfalls zur Erzeugung eines Signals, das monoton mit der Abstandsreduzierung zwischen Transducer und Probe wächst. Im Gegensatz zur Kapazitätsänderung wird hier von einer optischen Signalerzeugung Gebrauch gemacht. Die Unterseite des Transducers mit der Ausstülpung 7 ist mit einer lichtundurchlässigen Schicht bedeckt, die im Bereich der Ausstülpung 7 einen zentralen Bereich 58 für den Nahfeldkontrast aufweist und zusätzlich über paarweise angeordnete kleine Fenster 59, 60 verfügt. Die Fensterpaare sind vorzugsweise in radialer Richtung und symmetrisch zum zentralen Bereich 58 angeordnet. Jeweils eines der Fenster wird beleuchtet. Fig. 15 und Fig. 16 zeigen den Verlauf der Beleuchtungsstrahlen bei Annäherung an das Objekt 11.

In Fig. 15 liegt eine optimale Annäherung zum Objekt 11 vor. Von dem beleuchteten Fenster 59 gelangt das Licht nach Reflexion an der Oberfläche des Objekts 11 zu dem Fenster 60, wo es detektiert und in einem bestimmten Abstandsintervall ein vom Abstand abhängiges Signal liefert.

In Fig. 16 ist der Abstand zwischen der Objektoberfläche und der Ausstülpung so groß, daß das Licht nach Reflexion an der Objektoberfläche nicht in das Fenster 60 gelangt.

Eine gezielte Beleuchtung der Fenster wird mit einer mit geeigneten Öffnungen versehenen Leuchtfeldblende erreicht. Die in Fig. 5 dargestellte Anordnung ist mit entsprechend angepaßten Blendenöffnungen für die Beleuchtung geeignet.

**Bezugszeichenliste**

| 1 | Lichtquelle |
| 2 | Kondensor |
| 3 | Feldblende |
| 4 | Kollimatorlinse |
| 5 | Strahlteiler |
| 6 | Objektiv |
| 7 | Ausstülpung |
| 8 | Transducer |
| 9 | Immersion |
| 10 | Aperturblende |
| 11 | Objekt |
| 12 | Tubuslinse |
| 13 | Okular |
| 14 | Auge |
| 15 | Polarisator |
| 16 | Randstrahlen |
| 17 | Dunkelfeldblende |
| 18 | streuende Objektstruktur |
| 19 | langbrennweitige Linse |
| 20 | Bildsensor |
| 21 | Bildpunkt |
| 22 | ungebeugte Strahlen |
| 23 | Streulichtstrahlen |
| 24 | Zwangskopplung |
| 25 | Schicht |
| 26 | hochbrechende Lichtkoppler |
| 26' | konzentrische Gitterstruktur |
| 27 | Lichtbündel |
| 28 | Pfeilrichtung |
| 29 | optische Achse |
| 30 | Oberteil Prägevorrichtung |
| 31 | Unterteil Prägevorrichtung |
| 32 | Aussparung |
| 33 | Stempelspitze |
| 34 | Eindruckstempel |
| 35 | Rahmenplatte |
| 36 | Markierung |
| 37,38 | Halterungsteile |
| 39 | Magnet |
| 40,41,42 | Justierung |
| 43 | Objektivrevolver |
| 44 | halbdurchlässige Schicht |
| 45 | zum Objekt weisende Fläche |
| 46 | feine Gitterstruktur |
| 47 | Nahfeld-Lichtstrahlen |
| 48 | Fernfeld-Lichtstrahlen |
| 49,50 | Objektbereich |
| 51 | Quanten-Punkt-Laser |
| 52 | Mikroscan |
| 53,54 | Kondensatorstruktur |
| 55 | Grenzlinie |
| 56,57 | elektrische Kontakte |
| 58 | zentraler Bereich |
| 59,60 | kleine Fenster |

**Patentansprüche**

1. Transducer zur Erzeugung optischer Kontraste bei der Nahfelddarstellung von Topografien eines Objektes durch Auskopplung evaneszenter Wellen aus der Unterseite des Transducers, wobei die Transducerunterseite in der Fokusebene einer dem Transducer zugeordneten Abbildungsoptik angeordnet ist, **dadurch gekennzeichnet**, daß der Transducer (8) eine an die Bildfeldgröße der Abbildungsoptik (6) angepaßte, zum Objekt (11) weisende transparente planparallele Ausstülpung (7) aufweist.

2. Transducer nach Anspruch 1, **dadurch gekennzeichnet**, daß als Abbildungsoptik ein Objektiv eines Auflicht-Mikroskops vorgesehen ist.

3. Transducer nach Anspruch 2, **dadurch gekennzeichnet**, daß das Auflicht-Mikroskop mit einem Dunkelfeldstrahlengang ausgestattet ist.

4. Transducer nach Anspruch 1, **dadurch gekennzeichnet**, daß als Abbildungsoptik das Objektiv eines Informations-Schreib- und/oder-Lesegerätes vorgesehen ist und das Objekt eine optische Speicherplatte ist.

5. Transducer nach Anspruch 1, **dadurch gekennzeichnet**, daß der Transducer ein dünnes Glasplättchen ist und die Ausstülpung durch thermisches Prägen erzeugt ist.

6. Transducer nach Anspruch 5, **dadurch gekennzeichnet**, daß die Ausstülpung unter Verwendung eines Prägewerkzeugs hergestellt ist, dessen Eindruckstempel aus einem Material mit größerem thermischen Ausdehnungskoeffizienten besteht als das den Stempel tragende Gehäuse und daß die Längen von Stempel und Gehäuse so aufeinander abgestimmt sind, daß die Differenz der beiden thermischen Ausdehnungen beider Teile bei einer bestimmten Temperatur der angestrebten Tiefe der Ausstülpung entspricht.

7. Transducer nach Anspruch 6, **dadurch gekennzeichnet**, daß die Stempelspitze mit einem Röhrchen versehen ist, dessen Außendurchmesser dem angestrebten Durchmesser der Ausstülpung entspricht.

8. Transducer nach Anspruch 6, **dadurch gekennzeichnet**, daß die Stempelspitze mit einem Röhrchenarray versehen ist, wobei die Außendurchmesser der Röhrchen den angestrebten Durchmessern der einzelnen Ausstülpungen eines Ausstülpungsarrays entsprechen.

9. Transducer nach einem der Ansprüche 7 oder 8, **dadurch gekennzeichnet**, daß die Stempelspitze aus Edelstahl besteht.

10. Transducer nach Anspruch 1, **dadurch gekennzeichnet**, daß die Fläche der Ausstülpung mit einer konzentrisch zu ihrem Mittelpunkt liegenden Markierung versehen ist.

11. Transducer nach Anspruch 10, **dadurch gekennzeichnet**, daß die Markierung auf der zum Objekt weisenden Fläche der Ausstülpung angebracht ist.

12. Transducer nach Anspruch 1, **dadurch gekennzeichnet**, daß der Brechungsindex der Ausstülpung durch Einfügung einer Immersion an den Brechungsindex des Frontelementes der Abbildungsoptik angepaßt ist.

13. Transducer nach Anspruch 12, **dadurch gekennzeichnet**, daß als Immersion ein Öl vorgesehen ist.

14. Transducer nach Anspruch 12, **dadurch gekennzeichnet**, daß als Immersion eine transparente elastische oder plastische Substanz vorgesehen ist.

15. Transducer nach Anspruch 1, **dadurch gekennzeichnet**, daß auf die zum Objekt weisende Fläche der Ausstülpung eine gleichmäßig dicke, ebene Schicht aus einem höher brechenden und/oder härteren Material aufgebracht ist.

16. Transducer nach Anspruch 15, **dadurch gekennzeichnet**, daß die zum Objekt weisende Fläche der Ausstülpung im Randbereich mit refraktiven oder diffraktiven Strukturen versehen ist, durch die von der Abbildungsoptik kommende, parallele Lichtstrahlen in die höher brechende Schicht einkoppelbar sind.

17. Transducer nach Anspruch 1, **dadurch gekennzeichnet**, daß der Transducer in einer dünnen Rahmenplatte gehalten ist.

18. Transducer nach Anspruch 17, **dadurch gekennzeichnet**, daß die Rahmenplatte über eine justierbare Halterung mit der Abbildungsoptik verbunden ist.

19. Transducer nach Anspruch 18, **dadurch gekennzeichnet**, daß die justierbare Halterung eine Ausrichtung der Ausstülpung in der Fokusebene der Abbildungsoptik erlaubt.

20. Transducer nach Anspruch 1, **dadurch gekennzeichnet**, daß die zum Objekt weisende Fläche der Ausstülpung im Randbereich mit einer teiltransparenten Beschichtung versehen ist.

21. Transducer nach Anspruch 1, **dadurch gekennzeichnet**, daß die zum Objekt weisende Fläche der Ausstülpung eine linienförmige Gitterstruktur aufweist.

22. Transducer nach Anspruch 1, **dadurch gekennzeichnet**, daß die zum Objekt weisende Fläche der Ausstülpung ein Raster aus Quatenpunktlasern aufweist.

**23.** Transducer nach Anspruch 1, **dadurch gekennzeichnet**, daß die zum Objekt weisende Fläche der Ausstülpung eine gitterförmig angeordnete Punktstruktur aufweist, wobei die Punkte laterale Abmessungen besitzen, die vorzugsweise unterhalb des Auflösungsvermögens der Abbildungsoptik liegen und wobei die Punkte beispielsweise aus einem fluoreszierenden Material oder Metall bestehen.

**24.** Transducer nach Anspruch 1, **dadurch gekennzeichnet**, daß die zum Objekt weisende Fläche der Ausstülpung eine gitterförmig angeordnete Punktblendenstruktur aufweist, wobei die Blendenlöcher laterale Abmessungen besitzen, die vorzugsweise unterhalb des Auflösungsvermögens der Abbildungsoptik liegen und wobei diese Punktblenden als Lichtaustritts- und Lichteintrittsöffnungen für die Nahfelddarstellung der Topografie des Objekts dienen.

**25.** Transducer nach Anspruch 1, **dadurch gekennzeichnet**, daß die Fläche der Ausstülpung im Randbereich mit elektrisch leitenden Schichten versehen ist, die derart durch feine Trennlinien strukturiert sind, daß sich durch geeignete Kontaktierung zweier jeweils zusammenhängender, elektrisch voneinander isolierter Bereiche elektrische Kapazitäten einstellen.

**26.** Transducer nach Anspruch 25, **dadurch gekennzeichnet**, daß die elektrisch leitenden Schichten auf der zum Objekt oder Objektiv weisenden Fläche der Ausstülpung angebracht sind.

**27.** Transducer nach Anspruch 1, **dadurch gekennzeichnet**, daß die zum Objekt weisende Fläche der Ausstülpung im Randbereich mit einer opaken Schicht versehen ist, in der symmetrisch zueinander liegende Fenster zum Lichtaustritt und Lichteintritt vorgesehen sind.

Fig. 1

Fig. 2

Fig. 3

8

26

7

25

26

Fig. 4

6

9

8

27

26

25

28

7

28

26

27

Fig. 5

34

7

33

30

8

31

32

Fig.6

8

35

7

36

Fig.7

Fig. 8

Fig. 9

Fig. 10

Fig. 11

Fig. 12

Fig. 13

Fig. 14

Fig. 15

Fig. 16